**Europäisches Patentamt**

**European Patent Office**

**Office européen des brevets**

(19)

(11) Publication number: **0 193 225**

**A1**

(12)

# EUROPEAN PATENT APPLICATION

(21) Application number: **86200183.1**

(22) Date of filing: **10.02.86**

(51) Int. Cl.⁴: **F 16 K 31/06**

(30) Priority: **01.03.85 IT 4681585**

(43) Date of publication of application:
**03.09.86 Bulletin 86/36**

(84) Designated Contracting States:
**AT BE CH DE FR GB IT LI LU NL SE**

(71) Applicant: **Reggiani, Medardo
24, Via A. ALeardi
I-42100 Reggio Emilia(IT)**

(72) Inventor: **Reggiani, Medardo
24, Via A. ALeardi
I-42100 Reggio Emilia(IT)**

(74) Representative: **Corradini, Corrado
Studio Ing. C. CORRADINI & C. S.r.l. 4, Via Dante Alighieri
I-42100 Reggio Emilia(IT)**

(54) **Directly-operated solenoid ball valve for fluids in general.**

(57) A solenoid valve comprises a fluid passage chamber (2) provided with an inlet port (3) and at least one outlet port (4, 10), and housing a ball (5) which is normally kept in the closed position by elastic means (6), said ball (5) moving by lateral rolling followed by lifting, by the action of at least one fixed ferromagnetic core (7) which is disposed with its axis inclined to the axis of said at last one outlet port (4).

Fig. 7.

EP 0 193 225 A1

- 1 -

# DIRECTLY-OPERATED SOLENOID BALL VALVE FOR FLUIDS IN GENERAL

This industrial invention patent relates to a directly-operated solenoid valve, the valving member of which is subjected to a rolling movement during valve opening.

In the pressurised fluid field it is known to widely use solenoid valves for opening and closing the pipes through which said fluids pass.

Solenoid valves of the so-called directly operated type are known comprising a chamber in which an inlet port and an outlet port are provided. This latter acts as the valve seat for a valving member of ferromagnetic material, which is of conical or disc shape.

Coaxially to said valve seat and at a certain distance from said valving member there is disposed a ferromagnetic core about which a coil is disposed, and which when the coil is energised attracts the valving member to cause the valve to open.

The valving member is retained on its seat in the closed position by a spring and also by the pressure of the fluid present in the valve when this is closed. In order to open the valve by lifting the valving member, the magnetic force transmitted by the core, hereinafter known as the solenoid valve opening force, must therefore not only overcome the force of the spring but also the force generated by the fluid pressure.

The opening force is also inversely proportional to the distance of the valving member from said ferromagnetic core. This puts considerable limits on the use of known solenoid valves when they are required to operate with very high pressures or with very high throughputs.

In this respect, in the first case it is obvious that very large coils are required to provide sufficient opening force.

In the second case, the increased cross-section of the valve seat means that, on the one hand the closing force generated by the hydrostatic pressure is increased, and on the other hand because of the fact that the valving member has to be lifted to a considerable extent in order to leave a fluid passage area equal to the cross-section of the valve seat the fixed ferromagnetic core is located at a considerable distance from the valving member when the valve is closed, and is thus in a very unfavourable position.

The present patent provides and protects a solenoid valve which, within the framework of a simple and rational construction, offers a considerably better performance which enables it to be used in those sectors in which known directly-operated solenoid valves have been unable to be used up to the present time, and in which servo controlled solenoid valves have had to be used.

This is attained according to the invention by a solenoid valve comprising, within a fluid passage chamber provided with an inlet port and an outlet port, a ball-shaped ferromagnetic metal valving member which normally rests against the outlet port by virtue of a rear repositioning elastic member, and at least one fixed metal core with its axis inclined and preferably orthogonal to the axis of said outlet port, said core being disposed at a convenient distance from the ball and being provided with a coil which when energised retracts the ball, which moves by rolling in a direction which is inclined, and preferably nearly orthogonal, to the axis of the outlet port, with simultaneous partial opening of this latter, after which, having overcome the fluid thrust, it moves until this latter is completely open.

When the coil is de-energised, the ball separates from the core, and the repositioning member repositions it against the outlet port.

By virtue of said construction, if the ball and outlet port are suitably dimensioned, it is possible to open the valve using a force less than the sum of the thrusts which retain the valving member against its seat, and this is advantageous where the inlet fluid is under particularly high pressure, or where the valve seat is of large cross-section.

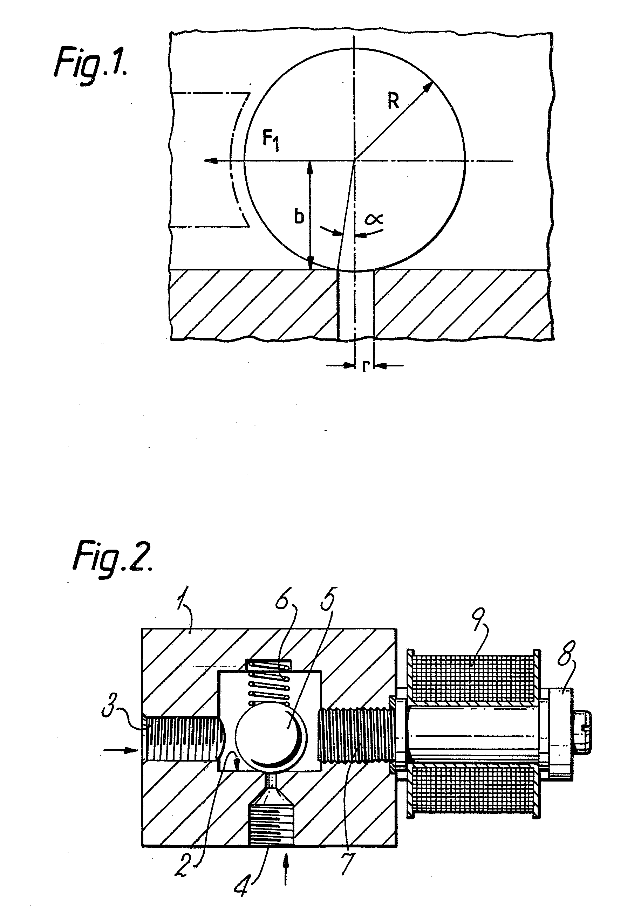

The reason for this is that during the initial opening movement, which is that in which the closure force due to the fluid pressure is overcome, the valving member is not pulled in the opposite direction to said thrust, as happens in the prior art, but is pulled transversely, and this requires a much smaller force, as specified hereinafter with reference to the operational diagram shown in the accompanying Figure 1.

In this respect, the maximum force $F_1$ which has to be applied to the spherical valving member for it to open is given by the following relationship, if the ferromagnetic core is orthogonal to the valve seat axis:

$$F_1 = p \cdot A \cdot \frac{r}{b}$$

where p is the fluid pressure, A is the cross-sectional area of the valve seat, r is the radius of the valve seat and b is the distance between the centre of the spherical valving member of radius r and the valve seat.

In theory, the invention offers no advantage if b = r, ie if the ratio $R/r = \sqrt{2}$.

However, in practice even if $R < r \cdot \sqrt{2}$ there is a very substantial advantage due to the fact that the distance between the ferromagnetic core and the spherical valving member can always be kept very small, and considerably less than the distance necessary in a directly-operated solenoid valve of conventional type.

This means that the magnetic force exerted by the same coil on a conventional valving member, for equal conditions, is very much less than that exerted on the valving member of the solenoid valve according to the invention, the result therefore being a much greater efficiency of this latter.

It should also be noted that the said force, even if modest, is the maximum force required of the magnetised core, seeing that the force necessary to move the ball tends to become irrelevant after this latter has practically lost contact with the outlet port.

In the aforegoing description, reference has always been made to one ferromagnetic core in order to clarify the operational principles of the invention.

It is however obviously suitable for various applications, which in practice will result in two or more ferromagnetic cores in order to adapt the invention to the various requirements of this field.

The use of at least two ferromagnetic cores with their axes either mutually cooncurrent or skew, and either concurrent or skew with the axis of the valve seat in fact enables one of said cores to be located with a minimum air gap between it and the valving member, the function of said core being to remove the valving member from its seat, whereas the remaining cores, which are required only to exert a very small force, can be disposed at a greater distance from the valving member in order to withdraw it from the valve seat by a sufficient distance to provide a sufficient fluid passage cross-section.

Furthermore, that end of the ferromagnetic core facing the spherical valving member can be flat or concave, with its radius of curvature greater than or equal to that of the valving member, so as to minimise the air gap when necessary, or, again when necessary, to cause the valving member to move until it becomes coaxial to the magnetic core.

The characteristics and constructional merits of the invention will be more apparent from the detailed description given hereinafter with reference to the figures of the accompanying drawings which illustrate some preferred embodiments thereof by way of non-limiting example.

Figure 1, as stated, is a diagrammatic representation which also shows the main forces in play at the moment of opening of the invention, they being shown in the same plane as the axes of the ferromagnetic core and outlet port.

Figures 2 and 3 are two diagrammatic, mutually orthogonal sectional views of a first embodiment of the invention.

Figure 4 is a modification of the invention shown in Figures 2 and 3.

Figures 5 and 6 are two sectional views of a further embodiment of the invention.

Figure 7 shows a further embodiment of the invention.

Figure 8 shows a further embodiment thereof, provided with two outlet ports.

It should be noted that in the figures the same component elements are given the same reference numerals.

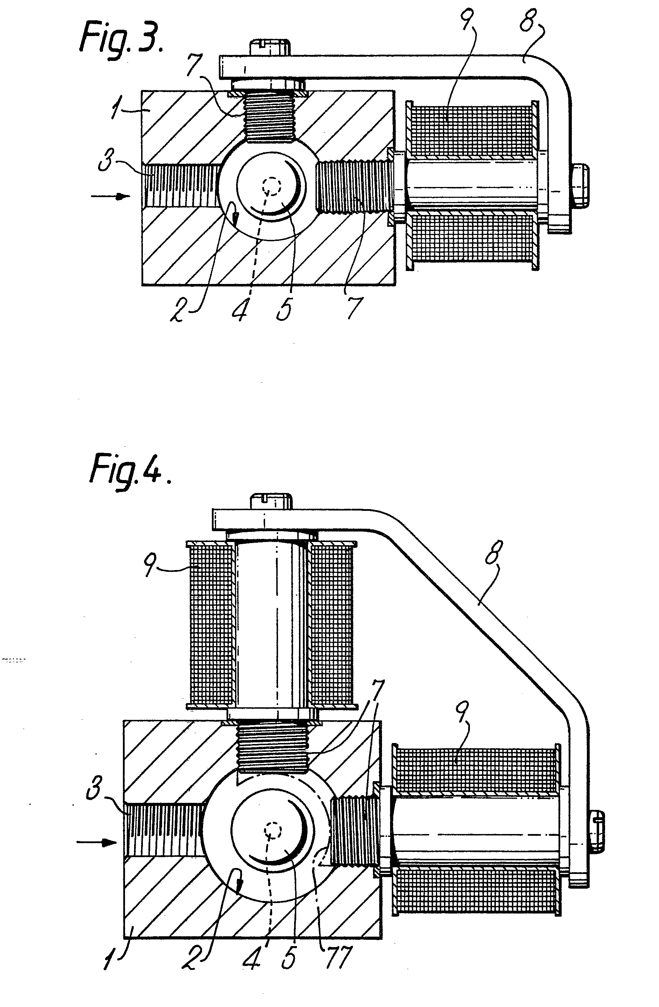

With reference to Figures 2 and 3, it can be seen that the solenoid valve in question comprises a valve body 1 provided with a fluid passage chamber 2 into which there opens an inlet port 3 for the pressurised fluid and an outlet port 4 for the same fluid.

Said chamber 2 houses a valving member in the form of a metal ball, said ball 5 normally resting against the outlet port valve seat 4 so as to close this latter.

Said positioning of the ball 5 is ensured by a spiral compression spring 5 disposed between a flat wall of the chamber 2 and said ball 5.

Two mutually coplanar and orthogonal ferromagnetic cores 7 are connected together by a ferromagnetic yoke, and traverse the valve body 1 in a sealed manner to enter the chamber 2, where their flat ends face the ball 5 at a certain distance (air gap) therefrom.

The outer terminal part of one of said cores 7 is provided with a coil 9, and the point of intersection of the two axes of said cores 7 coincides with the centre of the ball 5 when in the closed position.

When the coil 9 is energised, two attraction forces act on the inner ends of the two cores 7 by virtue of known electromagnetic phenomena, and these retract the ball 5 in the direction of their resultant until it rests against the cores 7, where it remains to keep the valve open until the coil 9 is de-energised.

As also stated heretofore, the ball 5 moves laterally by rolling on the flat wall of the chamber 2 in a direction which is approximately parallel to the bisector of the right angle defined by the two cores 7 (Figure 3), and which is orthogonal to the axis of the outlet port 4.

Essentially, for a determined inlet fluid pressure and for a determined r/R ratio as defined heretofore, the resultant of the attraction forces generated by the two cores 7 must be at least slightly greater than the force F₁ defined heretofore.

At this point it should be noted that when the coil 9 is de-energised, the small transverse elastic force stored by the spring 6 during the opening stage returns the ball 5 into the closed position.

According to the invention, in a modification shown in Figure 4, it is possible to provide a coil 9 for each core 7, thus allowing the retracting force for opening the ball 5 to be increased.

In the case illustrated, the lateral rolling of the ball 5 enables a gap of size at least equal to the cross-section of the outlet port 4 to be created between the ball 5 and said port 4.

Again with reference to Figure 4, it will be noted that instead of being flat, the ends of the two cores 7 can be shaped as a concave spherical cap 77, with its radius of curvature practically equal to that of the ball 5, to enable the known losses due to the air gaps to be reduced.

In Figure 4, said concave spherical cap-shaped ends 77 are shown with thin dashed and dotted lines.

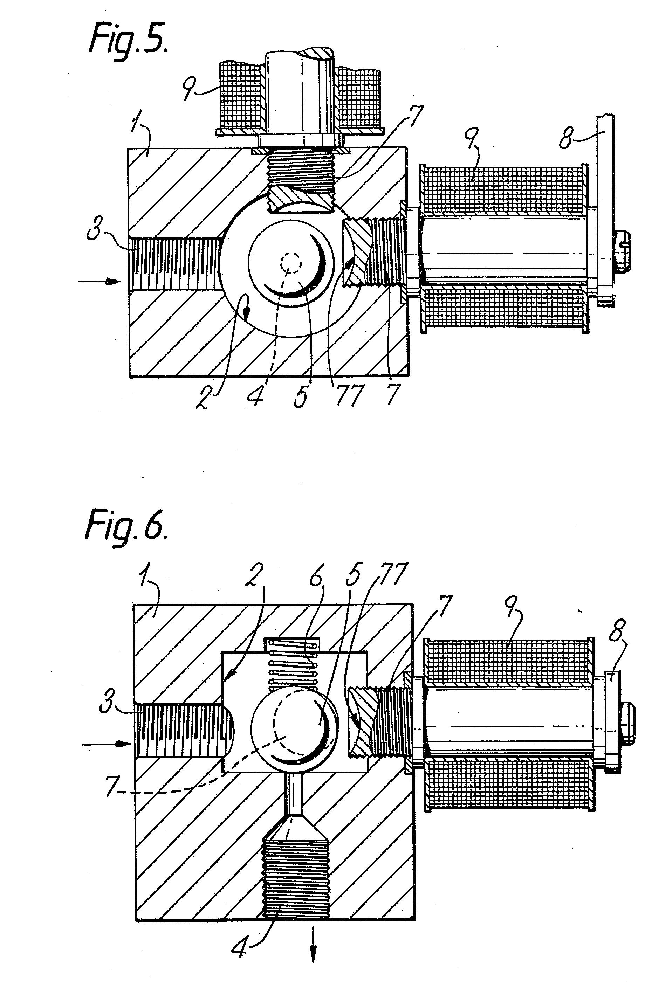

In the embodiment shown in Figures 5 and 6, two cores 7 are provided, having concave ends 77 as stated and being surrounded by the coil or coils 9.

In contrast to the cases heretofore described, in this embodiment when the ball 5 is in the closed position, the point of intersection of the longitudinal axes of the two orthogonal cores 7 lies above the centre of the ball 5 (Figure 6), and lies displaced from the axis of the outlet port 4 (Figure 5), and in particular is displaced towards said two cores 7.

From tests carried out it has been found that this embodiment is advantageous when in addition to transverse rolling, the ball 5 also requires lifting in order to increase the fluid passage gap.

In other possible embodiments, the point of intersection of the longitudinal axes of the two orthogonal cores 7 lies above the centre of the ball 5 when this is in the closed position, but lies on the longitudinal axis of the outlet port 4.

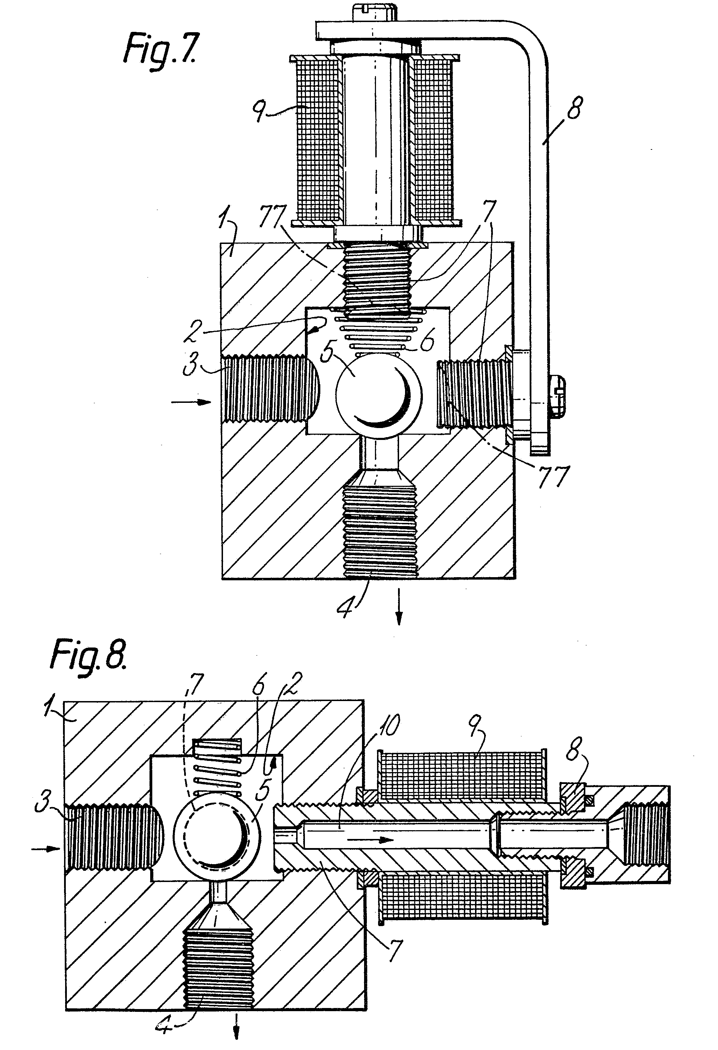

In the embodiment shown in Figure 7, which is particularly advantageous for solenoid valves which have a very large valve seat and thus require substantial lifting of the ball 5, one core 7 is disposed coaxial to the seat 4, whereas the other core 7 is orthogonal to the axis of said seat 4, and the point of intersection of the longitudinal axes of the two cores 7 preferably coincides with the centre of the ball 5 when in the closed position.

Two windings 9 can again be provided in this case, and the inner ends of the cores 7 can assume a cup shape 77.

In the embodiment of Figure 8, the invention can be implemented in a three-way solenoid valve, comprising an inlet duct 3, a first outgoing valve seat 4, and a second outgoing valve seat 10, which provides an alternative to the first and opens into a duct provided coaxially in one of said two orthogonal cores 7, and intended for connection to an alternative user item to that served by way of the seat 4.

In this particular embodiment, the seat 10 is alternately opened and closed as the ball 5 closes and opens the seat 4.

The invention is not limited to the illustrated and described embodiments, and includes all the equivalents of the described means and their combinations, but without leaving the scope of the inventive idea, the basic characteristics of which are summarised in the following claims.

PATENT CLAIMS

1.      A directly-operated solenoid valve for fluids in general, of the type comprising a ferromagnetic core which is surrounded by a coil and faces the interior of a chamber into which an inlet duct and an outlet duct defining a valve seat (4) open, and is positioned such as to exert a force of attraction on a valving member which is elastically urged to keep the valve seat (4) closed, characterised in that said valving member is constituted by a ball (5), and in that at least one ferromagnetic core (7) is provided, with its axis inclined to the axis of the valve seat (4).

2.      A solenoid valve as claimed in claim 1, characterised in that the axis of the ferromagnetic core (7) is orthogonal to the axis of the valve seat (4).

3.      A solenoid valve as claimed in claim 1, characterised by comprising two ferromagnetic cores (7), of which at least one is inclined to the axis of said valve seat (4), said cores (7) being connected together by a ferromagnetic yoke (8), and at least one of them being surrounded by a magnetisation coil (9).

4.      A solenoid valve as claimed in claim 1, characterised by comprising two mutually coplanar and orthogonal cores (7), one of which is coaxial to said valve seat (4) and the other of which is orthogonal to the longitudinal axis of this latter.

5.      A solenoid valve as claimed in claim 1, characterised by comprising two fixed cores (7), the point of intersection of their longitudinal axes lying on the longitudinal axis of said valve seat (4).

6.      A solenoid valve as claimed in claim 1, characterised by comprising two mutually orthogonal fixed cores (7), the point of intersection of their longitudinal axes being external to the longitudinal axis of the outgoing valve seat (4) and being

0193225

displaced towards the cores (7).

7.      A solenoid valve as claimed in claim 1, characterised in that the end of the at least one core (7) facing the ball (5) is of flat configuration.

8.      A solenoid valve as claimed in claim 1, characterised in that the end of the at least one core (7) facing the ball (5) is configured as a concave spherical cap (77) having a radius of curvature greater than or equal to that of the ball (5).

9.      A solenoid valve as claimed in claim 1, characterised by comprising two cores (7), one of which contains a coaxial outlet duct (10) which is alternately opened and closed by tha ball (5) as this latter closes and opens said valve seat (4).

*Fig.1.*

*Fig.2.*

0193225

**Fig. 3.**

**Fig. 4.**

0193225

**Fig.5.**

**Fig.6.**

4/4

*Fig.7.*

*Fig.8.*

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | DE-C- 914 086 (BANDITT)<br>* Page 2, lines 55-62 * | 1-5,9 | F 16 K 31/06 |
| X | US-A-2 857 127 (MILLERWISE)<br>* Whole document * | 1,2,7 | |
| X | US-A-2 056 322 (HOPPE)<br>* Whole document * | 1,2,8 | |
| X | CH-A- 495 519 (JENSEN)<br>* Whole document * | 1,2 | |
| X | FR-A-2 350 532 (SOCIETE GENERALE DE FONDERIE)<br>* Whole document * | 1-3 | |

TECHNICAL FIELDS
SEARCHED (Int. Cl.4)

F 16 K

The present search report has been drawn up for all claims

| Place of search | Date of completion of the search | Examiner |
|---|---|---|
| THE HAGUE | 15-05-1986 | VERELST P.E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82